# EUROPEAN PATENT APPLICATION

(11) **EP 2 827 139 A1**
(43) Date of publication of application: **21.01.2015**
(21) Application number: 13760769.3
(22) Date of filing: 11.03.2013
(51) Int. Cl.: G01N 27/327, G01N 27/416

(54) **BIOSENSOR**

(30) Priority: 15.03.2012 JP 2012058430
(71) Applicant: Murata Manufacturing Co., Ltd., Nagaokakyo-shi, Kyoto 617-8555 (JP)
(72) Inventor: TAKAGI, Jun, Nagaokakyo-shi, Kyoto 617-8555 (JP); OOE, Hideaki, Nagaokakyo-shi, Kyoto 617-8555 (JP); YOKOYAMA, Kenji, Tokyo 100-8921 (JP); HIRATSUKA, Atsunori, Tokyo 100-8921 (JP); SASAKI, Noriko, Tokyo 100-8921 (JP)
(74) Representative: Laufhütte, Dieter
(86) International application number: PCT/JP2013/056594
(87) International publication number: WO 2013/137172

(57) **Abstract**

Provided is a technique capable of suppressing reduction of a mediator in a stored state. A reagent layer (an enzyme layer 106b, a mediator layer 106c) stacked separately on a hydrophilic layer 106a containing a hydrophilic polymer having a double bond of oxygen atoms contains an enzyme, a mediator, and a hydrophilic polymer having no double bond of oxygen atoms. Accordingly, since the mediator is surrounded by the hydrophilic polymer having no double bond of oxygen atoms, the mediator contained in mediator layer 106c can be prevented from coming into contact with CMC as the hydrophilic polymer in hydrophilic layer 106a, and reduction of the mediator by the hydrophilic polymer having a double bond of oxygen atoms in hydrophilic layer 106a can be suppressed, in the stored state.

## Description

### TECHNICAL FIELD

The present invention relates to a biosensor including an electrode layer in which an electrode system including a working electrode and a counter electrode is provided, a spacer layer in which a slit for forming a cavity is formed and which is stacked on the electrode layer, a cover layer in which an air hole communicating to the cavity is formed and which is stacked on the spacer layer, and a reaction layer provided on the working electrode and the counter electrode.

### BACKGROUND ART

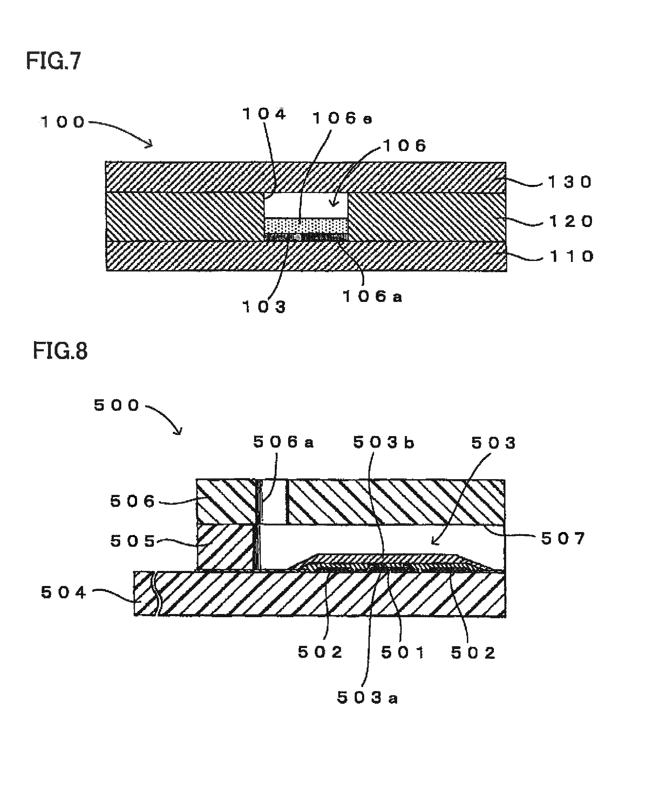

There has been known a substance measurement method that quantifies a substance to be measured by measuring, by means of a biosensor 500 which has an electrode system including a working electrode 501 and a counter electrode 502, and a reaction layer 503 containing an enzyme which specifically reacts with the substance to be measured as shown in a conventional biosensor of Fig. 8, an oxidation current obtained by oxidizing a reducing substance produced by a reaction between the substance to be measured which is contained in a sample and reaction layer 503, by applying a voltage between working electrode 501 and counter electrode 502 (see, for example, Patent Document 1).

Biosensor 500 shown in Fig. 8 is a sensor for quantifying glucose contained in the sample, and is formed by stacking an electrode layer 504 formed by providing electrodes on an insulating substrate made of such as polyethylene terephthalate or polyimide, a cover layer 506, and a spacer layer 505 arranged between electrode layer 504 and cover layer 506. Further, spacer layer 505 is provided with a slit for forming a cavity 507 into which the sample is to be supplied. When cover layer 506 is stacked on and bonded to electrode layer 504 with spacer layer 505 interposed therebetween, cavity 507 into which the sample is to be supplied is formed by electrode layer 504, a slit portion in spacer layer 505, and cover layer 506. Then, the sample is supplied into cavity 507 through a sample introduction port formed in a side surface of biosensor 500 by an opened portion of the slit. Furthermore, an air hole 506a communicating with a terminal portion of cavity 507 is formed in cover layer 506 to smoothly supply the sample into cavity 507 by means of a capillary phenomenon.

The electrode system is formed on electrode layer 504 by providing working electrode 501 and counter electrode 502 on electrode layer 504 and providing electrode patterns electrically connected to these electrodes 501, 502. Further, reaction layer 503 is provided on working electrode 501 and counter electrode 502, and working electrode 501 and counter electrode 502 are each provided on electrode layer 504 to be exposed at cavity 507 formed in biosensor 500.

Accordingly, when a liquid sample is supplied into cavity 507 through the sample introduction port, the sample comes into contact with electrodes 501, 502 and reaction layer 503 exposed at cavity 507, and reaction layer 503 is dissolved in the sample.

Further, reaction layer 503 provided on working electrode 501 and counter electrode 502 is formed by a hydrophilic layer 503a provided on electrode layer 504 and containing carboxymethyl cellulose (CMC) as a hydrophilic polymer, and a reagent layer 503b stacked on hydrophilic layer 503a and containing glucose oxidase specifically reacting with glucose contained in the sample and potassium ferricyanide as a mediator (electron acceptor). Hydrophilic layer 503a provided on electrode layer 504 protects electrodes 501, 502, and prevents delamination of reagent layer 503b.

Furthermore, ferricyanide ions produced by dissolution of potassium ferricyanide in the sample is reduced to ferrocyanide ions serving as a reductant, by electrons emitted when glucose reacts with glucose oxidase and is oxidized to gluconolactone. Therefore, when the sample containing glucose is supplied through the sample introduction port into cavity 507 formed in biosensor 500, ferricyanide ions are reduced by electrons emitted by the oxidation of glucose, and thus ferrocyanide ions serving as the reductant of ferricyanide ions are produced in an amount in accordance with a concentration of glucose which is contained in the sample and oxidized by an enzyme reaction.

In biosensor 500 configured as described above, an oxidation current obtained by oxidizing the reductant of the mediator produced as a result of the enzyme reaction on working electrode 501 has a magnitude dependent on the concentration of glucose in the sample. Therefore, glucose contained in the sample can be quantified by measuring the oxidation current.

### CITATION LIST

### PATENT DOCUMENT

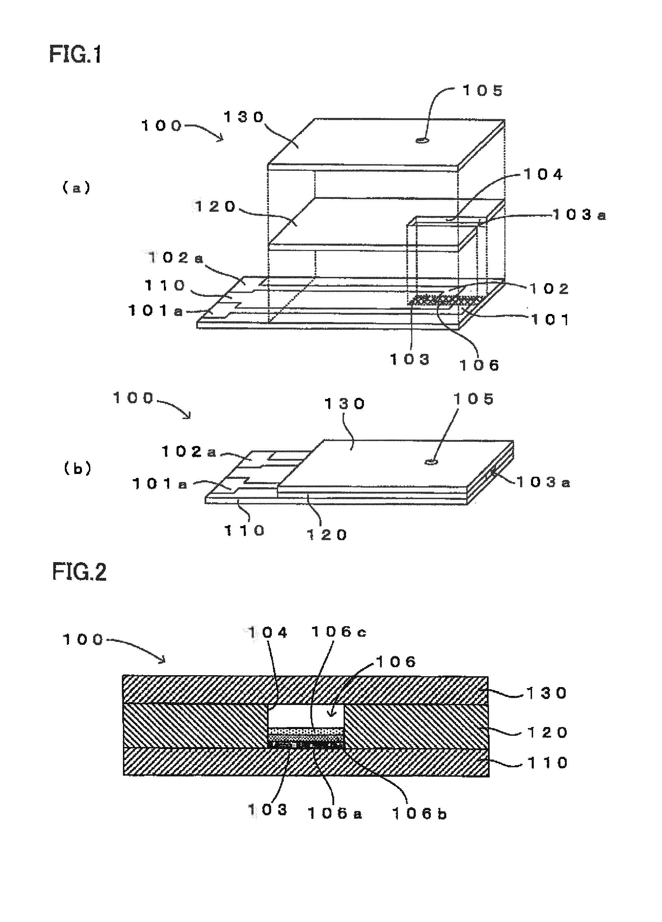

PTD 1: Japanese Patent Laying-Open No. 2001-281202 (paragraphs 0017, 0018, Fig. 2, and the like)

### SUMMARY OF INVENTION

### TECHNICAL PROBLEM

A blood sample contains blood cells such as red blood cells, and it has been known that the magnitude of the oxidation current described above is influenced by the magnitude of a hematocrit value which indicates a volume ratio of blood cells in the blood sample. Thus, in biosensor 500 described above, hydrophilic layer 503a provided on electrode layer 504 and containing CMC as a hydrophilic polymer filters the blood sample to suppress movement of blood cells in a direction toward the electrode layer, to decrease influence on measurement accuracy due to a difference in the hematocrit value.

However, it has been known that a hydrophilic polymer such as CMC reduces the mediator contained in reagent layer 503b. Accordingly, in a case where the mediator is reduced by the hydrophilic polymer contained in the hydrophilic layer in a state where, for example, biosensor 500 is stored, when the oxidation current described above is measured, an oxidation current generated by oxidation of the mediator reduced by the hydrophilic polymer is also measured as a background current, together with the oxidation current to be measured. Therefore, measurement accuracy is deteriorated. Thus, in biosensor 500, hydrophilic layer 503a containing the hydrophilic polymer and reagent layer 503b containing the mediator are stacked separately to prevent a reaction between the hydrophilic polymer contained in hydrophilic layer 503a and the mediator contained in reagent layer 503b.

Although hydrophilic layer 503a and reagent layer 503b are stacked separately as described above, however, the reaction between the hydrophilic polymer and the mediator gradually proceeds from an interface where hydrophilic layer 503a contacts with reagent layer 503b, and thereby accuracy of measurement using biosensor 500 is deteriorated. Therefore, there has been a demand for an improved technique.

The present invention has been made in view of the aforementioned problem, and one object of the present invention is to provide a technique capable of suppressing reduction of a mediator in a stored state.

### SOLUTION TO PROBLEM

In order to achieve the object described above, a biosensor in accordance with the present invention includes: an electrode layer in which an electrode system including a working electrode and a counter electrode is provided on one surface of an insulating substrate; a spacer layer in which a slit is formed and which is stacked on the one surface of the electrode layer with the slit being arranged on tip end sides of the working electrode and the counter electrode; a cavity which is formed by the electrode layer and the slit and into which a sample is to be supplied; a cover layer in which an air hole communicating to the cavity is formed and which is stacked on the spacer layer to cover the cavity; and a reaction layer provided on the tip end sides of the working electrode and the counter electrode exposed at the cavity, wherein the reaction layer includes a hydrophilic layer provided on the electrode layer and containing a hydrophilic polymer having a double bond of oxygen atoms, and a reagent layer stacked on the hydrophilic layer and containing an enzyme which reacts with a substance to be measured, a mediator, and a hydrophilic polymer having no double bond of oxygen atoms (claim 1).

In the invention configured as described above, the reaction layer provided on the tip end sides of the working electrode and the counter electrode exposed at the cavity formed by the slit in the spacer layer includes the hydrophilic layer containing the hydrophilic polymer having a double bond of oxygen atoms, and the reagent layer containing the enzyme, the mediator, and the hydrophilic polymer having no double bond of oxygen atoms. When a hydrophilic polymer has a double bond of oxygen atoms, it is considered that a functional group which has a double bond of oxygen atoms performs nucleophilic attack on a mediator and thereby the mediator is reduced. On the other hand, the reagent layer stacked separately on the hydrophilic layer containing the hydrophilic polymer having a double bond of oxygen atoms contains the enzyme, the mediator, and the hydrophilic polymer having no double bond of oxygen atoms.

Accordingly, since the mediator is surrounded by the hydrophilic polymer having no double bond of oxygen atoms, the mediator contained in the reagent layer can be prevented from coming into contact with the hydrophilic polymer in the hydrophilic layer, and reduction of the mediator by the hydrophilic polymer in the hydrophilic layer can be suppressed, in a stored state. Further, generally, a hydrophilic polymer having a double bond of oxygen atoms has a higher effect of inhibiting movement of blood cells and the like than a hydrophilic polymer having no double bond of oxygen atoms. Since the hydrophilic layer provided on the electrode layer contains the hydrophilic polymer having a double bond of oxygen atoms, for example when a blood sample is supplied into the cavity in the biosensor, the hydrophilic polymer in the hydrophilic layer efficiently filters the blood sample to inhibit movement of blood cells contained in the blood sample. Thus, influence on measurement accuracy due to a difference in the hematocrit value of the blood sample can be decreased. Therefore, with this reagent structure, suppression of reduction of the mediator and decrease of influence on measurement accuracy due to a difference in the hematocrit value can be both achieved, and an accurate and reliable biosensor can be provided.

Further, the reaction layer may further include an intermediate layer containing the hydrophilic polymer having no double bond of oxygen atoms between the hydrophilic layer and the reagent layer (claim 2).

With this configuration, since the intermediate layer containing the hydrophilic polymer having no double bond of oxygen atoms is provided between the hydrophilic layer and the reagent layer, and the intermediate layer prevents the hydrophilic polymer having a double bond of oxygen atoms contained in the hydrophilic layer from coming into contact with the mediator contained in the reagent layer, reduction of the mediator contained in the reagent layer by the hydrophilic polymer in the hydrophilic layer can be further suppressed.

Further, the reagent layer desirably includes an enzyme layer containing the enzyme and the hydrophilic polymer having no double bond of oxygen atoms, and a mediator layer containing the mediator and the hydrophilic polymer having no double bond of oxygen atoms (claim 3).

With this configuration, since the reagent layer is formed by the enzyme layer containing the enzyme and the hydrophilic polymer having no double bond of oxygen atoms, and the mediator layer containing the mediator and the hydrophilic polymer having no double bond of oxygen atoms, and the enzyme is separated from the mediator, reduction of the mediator by the enzyme in the stored state can be suppressed.

Further, the mediator layer may be stacked on the enzyme layer (claim 4).

With this configuration, the mediator layer is stacked on the enzyme layer, and the enzyme layer is arranged at a position closer to the electrode layer. Since the enzyme has a mobility smaller than that of the mediator, the amount of the enzyme and the mediator in the vicinity of the electrode is larger than that in a case where the enzyme is stacked on the mediator, and thus responsiveness and measurement accuracy of the sensor are improved.

Further, the hydrophilic polymer having no double bond of oxygen atoms desirably includes at least one of hydroxypropyl methylcellulose, hydroxypropyl cellulose, methylcellulose, hydroxyethyl cellulose, hydroxyethyl methylcellulose, polyvinyl alcohol, and polyethylene glycol (claim 5).

With this configuration, since at least one of hydroxypropyl methylcellulose, hydroxypropyl cellulose, methylcellulose, hydroxyethyl cellulose, hydroxyethyl methylcellulose, polyvinyl alcohol, and polyethylene glycol is contained in the reagent layer as the hydrophilic polymer having no double bond of oxygen atoms, reduction of the mediator contained in the reagent layer can be prevented, and delamination of the reagent layer from the hydrophilic layer can be prevented. Thus, a biosensor having a practical configuration can be provided.

Further, the hydrophilic polymer having a double bond of oxygen atoms desirably includes at least carboxymethyl cellulose (claim 6).

With this configuration, since the hydrophilic layer containing at least carboxymethyl cellulose as the hydrophilic polymer having a double bond of oxygen atoms is provided on the electrode layer, delamination of the reagent layer stacked on the hydrophilic layer can be prevented. Further, for example when a blood sample is supplied into the cavity in the biosensor, the hydrophilic polymer in the hydrophilic layer filters the blood sample to inhibit movement of blood cells contained in the blood sample. Thus, influence on measurement accuracy due to a difference in the hematocrit value of the blood sample can be decreased.

### ADVANTAGEOUS EFFECTS OF INVENTION

According to the present invention, since the mediator is surrounded by the hydrophilic polymer having no double bond of oxygen atoms, the mediator contained in the reagent layer can be prevented from coming into contact with the hydrophilic polymer in the hydrophilic layer, and reduction of the mediator by the hydrophilic polymer in the hydrophilic layer can be suppressed, in a stored state. Further, for example when a blood sample is supplied into the cavity in the biosensor, the hydrophilic polymer having a double bond of oxygen atoms in the hydrophilic layer efficiently filters the blood sample to inhibit movement of blood cells contained in the blood sample. Thus, influence on measurement accuracy due to a difference in the hematocrit value of the blood sample can be decreased. Therefore, with this reagent structure, suppression of reduction of the mediator and decrease of influence on measurement accuracy due to a difference in the hematocrit value can be both achieved, and an accurate and reliable biosensor can be provided.

### BRIEF DESCRIPTION OF DRAWING

Fig. 1 shows a biosensor in accordance with a first embodiment of the present invention, in which Fig. 1(a) is an exploded perspective view and Fig. 1(b) is a perspective view.
Fig. 2 is a cross sectional view of a cavity portion of the biosensor of Fig. 1.
Fig. 3 shows a method for manufacturing the biosensor in accordance with the first embodiment of the present invention, in which Figs. 3(a) to 3(c) show different steps.
Fig. 4 shows the relation between a storage period and a background current of the biosensor.
Fig. 5 is a cross sectional view of a cavity portion of a biosensor in accordance with a second embodiment of the present invention.
Fig. 6 is a cross sectional view of a cavity portion of a biosensor in accordance with a third embodiment of the present invention.
Fig. 7 is a cross sectional view of a cavity portion of a biosensor in accordance with a fourth embodiment of the present invention.
Fig. 8 is a view showing a conventional biosensor.

### DESCRIPTION OF EMBODIMENTS

### <First Embodiment>

A biosensor and a method for manufacturing the biosensor in accordance with a first embodiment of the present invention will be described with reference to Figs. 1 to 4.

### (Configuration of Biosensor and Manufacturing Method Therefor)

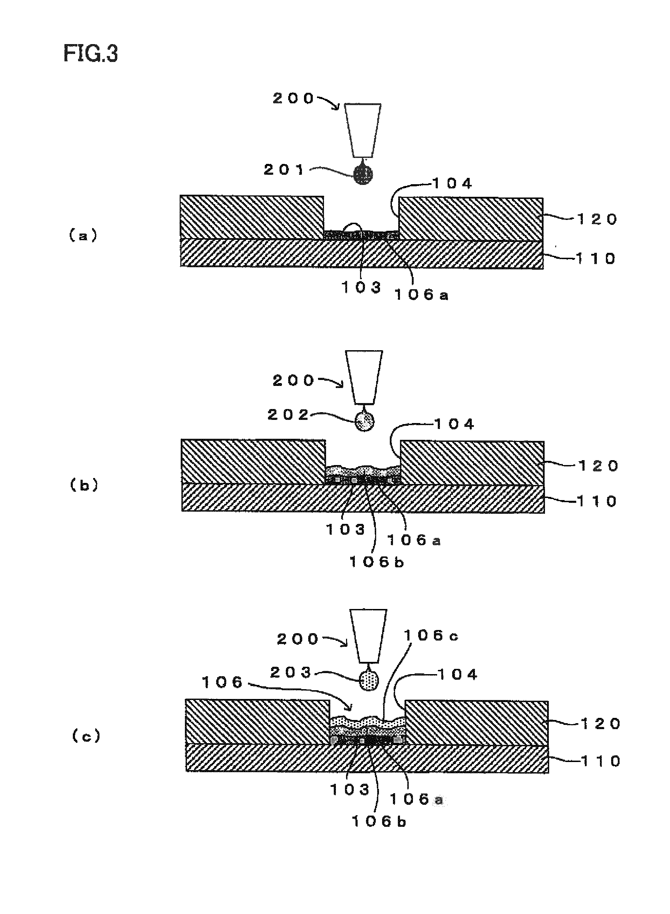

Fig. 1 shows a biosensor in accordance with a first embodiment of the present invention, in which Fig. 1(a) is an exploded perspective view and Fig. 1(b) is a perspective view. Fig. 2 is a cross sectional view of a cavity portion of the biosensor of Fig. 1. Fig. 3 shows a method for manufacturing the biosensor in accordance with the first embodiment of the present invention, in which Figs. 3(a) to 3(c) show different steps.

A biosensor 100 in accordance with the present invention has an electrode system including a working electrode 101 and a counter electrode 102, and a reaction layer 106 containing a mediator and an enzyme which reacts with a substance to be measured, and is intended to be attached to a measuring instrument (not shown) for use. Namely, biosensor 100 quantifies a substance to be measured which is contained in a sample, by measuring an oxidation current obtained by oxidizing a reducing substance produced by a reaction between the substance to be measured such as glucose contained in the sample such as blood supplied into a cavity 103 provided on a tip end side of biosensor 100 attached to the measuring instrument and reaction layer 106 provided in biosensor 100, by applying a voltage between working electrode 101 and counter electrode 102.

Specifically, biosensor 100 is formed by stacking and bonding an electrode layer 110 in which the electrode system including working electrode 101 and counter electrode 102 is provided, a cover layer 130 in which an air hole 105 communicating to cavity 103 is formed, and a spacer layer 120 in which a slit 104 for forming cavity 103 is formed and which is arranged between electrode layer 110 and cover layer 130, each of these layers being formed of an insulating material such as ceramics, glass, plastic, paper, a biodegradable material, or polyethylene terephthalate, with their tip end sides, which are provided with a sample introduction port 103a, being aligned, as shown in Figs. 1 and 2. Further, on working electrode 101 and counter electrode 102 is provided reaction layer 106 containing the enzyme which reacts with the substance to be measured such as glucose contained in the sample. Biosensor 100 is attached to the measuring instrument by being inserted into and attached to a predetermined insertion port in the measuring instrument from a rear end side.

In the present embodiment, electrode layer 110 is formed of an insulating substrate made of an insulating material such as polyethylene terephthalate. Further, on one surface of the insulating substrate forming electrode layer 110, a conductive layer made of a noble metal such as platinum, gold, or palladium or a conductive substance such as carbon, copper, aluminum, titanium, ITO (Indium Tin Oxide), or ZnO (Zinc Oxide) is formed by screen printing or a sputtering deposition method. Then, a pattern is formed on the conductive layer formed on the one surface of the insulating substrate by laser processing or photolithography, thereby forming the electrode system which includes working electrode 101 and counter electrode 102, and electrode patterns 101a, 102a which electrically connect working electrode 101 and counter electrode 102 with the measuring instrument when biosensor (sensor chip) 100 is attached to the measuring instrument.

Further, working electrode 101 and counter electrode 102 are arranged such that their tip end sides are exposed at cavity 103. Furthermore, electrode patterns 101a, 102a on rear end sides of working electrode 101 and counter electrode 102, respectively, are formed to extend to an end edge of electrode layer 110 which is opposite to sample introduction port 103a and on which spacer layer 120 is not stacked.

Next, spacer layer 120 is stacked on electrode layer 110 formed as described above. Spacer layer 120 is formed of a substrate made of an insulating material such as polyethylene terephthalate, and slit 104 for forming cavity 103 is formed in substantially the center of a tip end edge portion of the substrate. Spacer layer 120 is stacked to partially cover one surface of electrode layer 110 with slit 104 being arranged on the tip end sides of working electrode 101 and counter electrode 102, and thereby cavity 103 into which the sample is to be supplied is formed by electrode layer 110 and slit 104.

Subsequently, the portion of cavity 103 formed by stacking spacer layer 120 on electrode layer 110 is subjected to cleaning treatment by means of plasma, and thereafter reaction layer 106 is formed. It is noted that, as the plasma used in the plasma cleaning step, various plasmas used in metal activation treatment by means of plasma such as oxygen plasma, nitrogen plasma, and argon plasma can be used, and low-pressure plasma or atmospheric-pressure plasma may be used.

As shown in Figs. 3(a) to 3(c), reaction layer 106 is formed by dripping a reagent 201 containing a hydrophilic polymer having a double bond of oxygen atoms such as carboxymethyl cellulose (CMC), a reagent 202 containing an enzyme and a hydrophilic polymer having no double bond of oxygen atoms, and a reagent 203 containing a mediator and a hydrophilic polymer having no double bond of oxygen atoms, in order, on the tip end sides of working electrode 101 and counter electrode 102 exposed at cavity 103, before cover layer 130 is stacked on spacer layer 120. Further, a hydrophilizing agent such as a surfactant or phospholipid is applied to an inner wall of cavity 103 to smoothly supply the sample such as blood into cavity 103.

Specifically, reaction layer 106 includes a hydrophilic layer 106a provided on electrode layer 110 and containing the hydrophilic polymer having a double bond of oxygen atoms, an enzyme layer 106b stacked on hydrophilic layer 106a and containing the enzyme and the hydrophilic polymer having no double bond of oxygen atoms, and a mediator layer 106c stacked on enzyme layer 106b and containing the mediator and the hydrophilic polymer having no double bond of oxygen atoms, and is formed as described below.

Namely, hydrophilic layer 106a is formed by dripping a predetermined amount of reagent 201 containing CMC as the hydrophilic polymer having a double bond of oxygen atoms from a dripping apparatus 200 into cavity 103 and drying reagent 201, as shown in Fig. 3(a) (a hydrophilic layer formation step). Next, enzyme layer 106b is formed by dripping a predetermined amount of reagent 202 containing the enzyme and methylcellulose as the hydrophilic polymer having no double bond of oxygen atoms from dripping apparatus 200 into cavity 103 and drying reagent 202, as shown in Fig. 3(b) (an enzyme layer formation step).

Subsequently, mediator layer 106c is formed by dripping a predetermined amount of reagent 203 containing the mediator and hydroxypropyl methylcellulose as the hydrophilic polymer having no double bond of oxygen atoms from dripping apparatus 200 into cavity 103 and drying reagent 203, as shown in Fig. 3(c) (a mediator layer formation step). Thereby, reaction layer 106 is formed.

Although enzyme layer 106b is formed in cavity 103 and thereafter mediator layer 106c is formed on enzyme layer 106b in the example described above, mediator layer 106c may be formed in cavity 103 and thereafter enzyme layer 106b may be formed on mediator layer 106c. In this manner, in the present embodiment, enzyme layer 106b and mediator layer 106c constitute a "reagent layer" in the present invention.

As the enzyme, glucose oxidase, lactate oxidase, cholesterol oxidase, alcohol oxidase, sarcosine oxidase, fructosylamine oxidase, pyruvic oxidase, glucose dehydrogenase, lactate dehydrogenase, alcohol dehydrogenase, hydroxybutyrate dehydrogenase, cholesterol esterase, creatininase, creatinase, DNA polymerase, or the like can be used. Various sensors can be formed by selecting any of these enzymes in accordance with a substance to be measured (glucose, lactic acid, cholesterol, alcohol, sarcosine, fructosylamine, pyruvic acid, hydroxybutyric acid, or the like) for detection.

For example, when glucose oxidase or glucose dehydrogenase is used, a glucose sensor for detecting glucose in a blood sample can be formed. When alcohol oxidase or alcohol dehydrogenase is used, an alcohol sensor for detecting ethanol in a blood sample can be formed. When lactate oxidase is used, a lactic acid sensor for detecting lactic acid in a blood sample can be formed. When a mixture of cholesterol esterase and cholesterol oxidase is used, a total cholesterol sensor can be formed.

As the mediator, potassium ferricyanide, ferrocene, a ferrocene derivative, benzoquinone, a quinone derivative, an osmium complex, a ruthenium complex, or the like can be used.

As the hydrophilic polymer having a double bond of oxygen atoms, a polymer having a carbonyl group, an acyl group, a carboxyl group, an aldehyde group, a sulfo group, a sulfonyl group, a sulfoxide group, a tosyl group, a nitro group, a nitroso group, an ester group, a keto group, a ketene group, or the like can be used.

As the hydrophilic polymer having no double bond of oxygen atoms, hydroxypropyl methylcellulose, hydroxypropyl cellulose, methylcellulose, hydroxyethyl cellulose, hydroxyethyl methylcellulose, polyvinyl alcohol, polyethylene glycol, or the like can be used. It is noted that the hydrophilic polymers having no double bond of oxygen atoms which are mixed into reagents 202, 203 together with the enzyme and the mediator, respectively, serve as thickening agents. Further, two or more types of the hydrophilic polymers having a double bond of oxygen atoms or the hydrophilic polymers having no double bond of oxygen atoms may be combined for use.

As the hydrophilizing agent, a surfactant such as Triton X100 (manufactured by Sigma-Aldrich Co.), Tween 20 (manufactured by Tokyo Chemical Industry Co., Ltd.), or sodium bis(2-ethylhexyl) sulfosuccinate, or phospholipid such as lecithin can be used. Further, the hydrophilizing agent may be mixed into each of reagents 202, 203 and dripped into cavity 103, or may be dripped into cavity 103 after the reagent layer is formed, instead of being applied to cavity 103 as described above. The hydrophilizing agent may be applied to a surface of cover layer 130 on a side facing the spacer layer. In addition, a buffer such as phosphoric acid may be provided to decrease variations in the concentration of ions contained in a sample.

Next, after reaction layer 106 is formed in cavity 103, cover layer 130 formed of a substrate made of an insulating material such as polyethylene terephthalate is stacked on spacer layer 120, and thereby biosensor 100 is formed. As shown in Figs. 1 (a) and 1(b), air hole 105 communicating to cavity 103 when cover layer 130 is stacked on spacer layer 120 is formed in cover layer 130, and cover layer 130 is stacked on spacer layer 120 to cover cavity 103.

It is noted that, in the present embodiment, biosensor 100 is formed for the purpose of quantifying glucose in blood. Reaction layer 106 which contains GDH (glucose dehydrogenase) that uses FAD (flavin adenine dinucleotide) as a coenzyme (hereinafter referred to as FAD-GDH) as an enzyme specifically reacting with glucose representing the substance to be measured, and contains potassium ferricyanide as a mediator which will become a reducing substance as a result of reduction by electrons generated by a reaction between glucose representing the substance to be measured and FAD-GDH is provided on the tip end sides of working electrode 101 and counter electrode 102 exposed at cavity 103.

In biosensor 100 configured as described above, by bringing a blood sample into contact with sample introduction port 103a at the tip end, the sample is suctioned toward air hole 105 by a capillary phenomenon, and the sample is supplied into cavity 103. Then, as reaction layer 106 is dissolved in the sample supplied into cavity 103, electrons are emitted by an enzyme reaction between glucose representing the substance to be measured in the sample and FAD-GDH, the emitted electrons reduce ferricyanide ions, and ferrocyanide ions representing a reducing substance are produced. Subsequently, the measuring instrument quantifies glucose in the sample by measuring an oxidation current which flows between working electrode 101 and counter electrode 102 of biosensor 100 by electrochemically oxidizing the reducing substance produced by an oxidation-reduction reaction caused by the dissolution of reaction layer 106 in the sample, by applying a voltage (for example, 0.3 V) between working electrode 101 and counter electrode 102. It is noted that a current value after a lapse of three to five seconds since the application of the voltage between working electrode 101 and counter electrode 102 of biosensor 100 is measured as the oxidation current.

### (Example of Comparison of Background Currents)

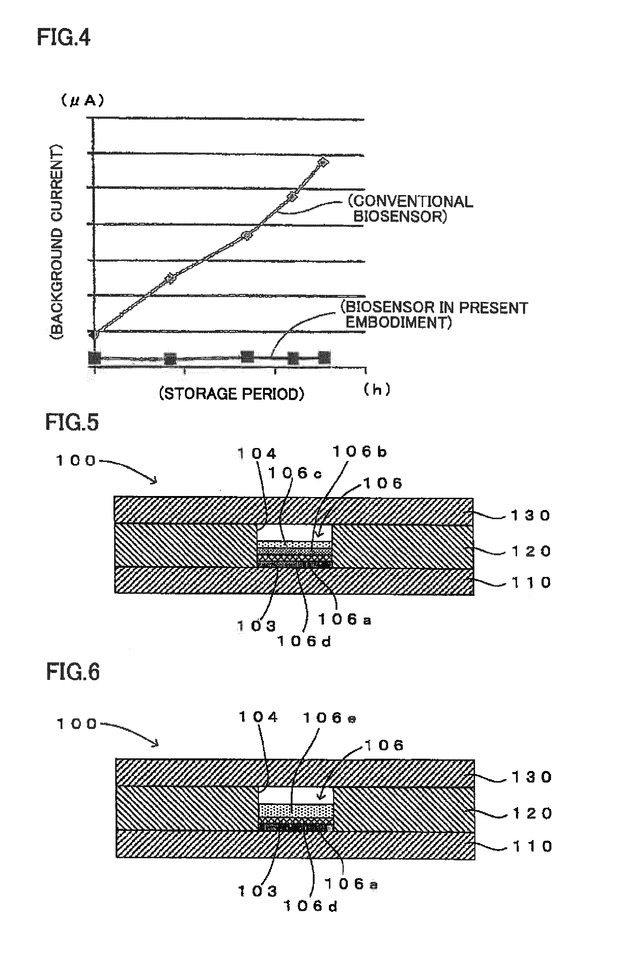

Fig. 4 shows the relation between a storage period and a background current of the biosensor. The axis of abscissas represents the storage period (h), and the axis of ordinate represents the magnitude of the background current (µA). In addition, solid diamond marks in the drawing indicate the background current of a conventional biosensor in which enzyme layer 106b and mediator layer 106c do not contain a hydrophilic polymer having no double bond of oxygen atoms, and solid square marks in the drawing indicate the background current of biosensor 100 in accordance with the present embodiment. It is noted that the background current was measured by supplying a sample for measuring the background current into cavity 103 and thereafter measuring an oxidation current as in an ordinary procedure.

As shown in Fig. 4, as the storage period of the biosensor is increased, the background current of the conventional biosensor is increased over time, whereas an increase in the background current is suppressed in biosensor 100 in accordance with the present embodiment.

As described above, according to the present embodiment, reaction layer 106 provided on the tip end sides of working electrode 101 and counter electrode 102 exposed at cavity 103 formed by slit 104 in spacer layer 120 includes hydrophilic layer 106a provided on electrode layer 110 and containing CMC, enzyme layer 106b stacked on hydrophilic layer 106a and containing the enzyme and methylcellulose, and mediator layer 106c stacked on enzyme layer 106b and containing the mediator and hydroxypropyl methylcellulose. When a hydrophilic polymer has a double bond of oxygen atoms, it is considered that a functional group which has a double bond of oxygen atoms performs nucleophilic attack on a mediator and thereby the mediator is reduced. On the other hand, the reagent layer (enzyme layer 106b, mediator layer 106c) stacked separately on hydrophilic layer 106a containing the hydrophilic polymer having a double bond of oxygen atoms contains the enzyme, the mediator, and the hydrophilic polymer having no double bond of oxygen atoms.

Accordingly, since the mediator is surrounded by hydroxypropyl methylcellulose as the hydrophilic polymer having no double bond of oxygen atoms, the mediator contained in mediator layer 106c can be prevented from coming into contact with CMC as the hydrophilic polymer in hydrophilic layer 106a, and reduction of the mediator by CMC in hydrophilic layer 106a can be suppressed, in a stored state.

Further, generally, a hydrophilic polymer having a double bond of oxygen atoms has a higher effect of inhibiting movement of blood cells and the like than a hydrophilic polymer having no double bond of oxygen atoms. Since hydrophilic layer 106a provided on electrode layer 110 contains CMC having a double bond of oxygen atoms, when a blood sample is supplied into cavity 103 in biosensor 100, CMC in hydrophilic layer 106a efficiently filters the blood sample to inhibit movement of blood cells contained in the blood sample. Thus, influence on measurement accuracy due to a difference in the hematocrit value of the blood sample can be decreased. Therefore, accurate and reliable biosensor 100 can be provided.

Furthermore, since the reagent layer is formed by enzyme layer 106b containing the enzyme and methylcellulose having no double bond of oxygen atoms, and mediator layer 106c containing the mediator and hydroxypropyl methylcellulose having no double bond of oxygen atoms, and the enzyme is separated from the mediator, a reaction between the enzyme and the mediator in the stored state can be suppressed.

In addition, mediator layer 106c is stacked on enzyme layer 106b, and enzyme layer 106b is arranged at a position closer to electrode layer 110. Since the enzyme has a mobility smaller than that of the mediator, the amount of the enzyme and the mediator in the vicinity of the electrode is larger than that in a case where the enzyme is stacked on the mediator, and thus responsiveness and measurement accuracy of the sensor are improved.

Further, since at least one of hydroxypropyl methylcellulose, hydroxypropyl cellulose, methylcellulose, hydroxyethyl cellulose, hydroxyethyl methylcellulose, polyvinyl alcohol, and polyethylene glycol is contained in the reagent layer as the hydrophilic polymer having no double bond of oxygen atoms, reduction of the mediator contained in the reagent layer can be prevented, and delamination of the reagent layer from hydrophilic layer 106a can be prevented. Thus, biosensor 100 having a practical configuration can be provided.

Furthermore, since hydrophilic layer 106a containing at least CMC as the hydrophilic polymer having a double bond of oxygen atoms is provided on electrode layer 110, delamination of the reagent layer stacked on hydrophilic layer 106a can be prevented. Further, when a blood sample is supplied into cavity 103 in biosensor 100, the hydrophilic polymer in hydrophilic layer 106a filters the blood sample to inhibit movement of blood cells contained in the blood sample. Thus, influence on measurement accuracy due to a difference in the hematocrit value of the blood sample can be decreased. By adopting this reagent structure as described above, both the effect of suppressing an increase in the background current due to the reduction of the mediator by CMC and the effect of decreasing variations in measurement accuracy due to a difference in the hematocrit value derived from CMC can be achieved. Therefore, accurate and reliable biosensor 100 can be provided.

### <Second Embodiment>

A biosensor in accordance with a second embodiment of the present invention will be described with reference to Fig. 5. Fig. 5 is a cross sectional view of a cavity portion of a biosensor in accordance with a second embodiment of the present invention. The present embodiment is different from the first embodiment described above in that an intermediate layer 106d containing a hydrophilic polymer having no double bond of oxygen atoms is further provided between hydrophilic layer 106a and enzyme layer 106b (reagent layer), as shown in Fig. 5. Since other components are identical to those in the first embodiment described above, description of other components and operations thereof will not be repeated by giving the same reference numerals.

With this configuration, since intermediate layer 106d containing the hydrophilic polymer having no double bond of oxygen atoms is provided between hydrophilic layer 106a and enzyme layer 106b, and intermediate layer 106d further prevents the hydrophilic polymer having a double bond of oxygen atoms contained in hydrophilic layer 106a from coming into contact with the mediator contained in mediator layer 106c, reduction of the mediator contained in mediator layer 106c by the hydrophilic polymer in hydrophilic layer 106a can be further suppressed.

### <Third Embodiment>

A biosensor in accordance with a third embodiment of the present invention will be described with reference to Fig. 6. Fig. 6 is a cross sectional view of a cavity portion of a biosensor in accordance with a third embodiment of the invention. The present embodiment is different from the second embodiment described above in that a reagent layer 106e with a single layer structure containing an enzyme, a mediator, and a hydrophilic polymer having no double bond of oxygen atoms is stacked on intermediate layer 106d, as shown in Fig. 6. Since other components are identical to those in the first embodiment described above, description of other components and operations thereof will not be repeated by giving the same reference numerals.

As described above, also in the present embodiment, the same effect as those in the first and second embodiments described above can be obtained.

### <Fourth Embodiment>

A biosensor in accordance with a fourth embodiment of the present invention will be described with reference to Fig. 7. Fig. 7 is a cross sectional view of a cavity portion of a biosensor in accordance with a fourth embodiment of the invention. The present embodiment is different from the first embodiment described above in that reagent layer 106e with a single layer structure containing the enzyme, the mediator, and the hydrophilic polymer having no double bond of oxygen atoms is stacked on hydrophilic layer 106a, as shown in Fig. 7. Since other components are identical to those in the first embodiment described above, description of other components and operations thereof will not be repeated by giving the same reference numerals.

As described above, also in the present embodiment, the same effect as that in the first embodiment described above can be obtained.

It is noted that the present invention is not limited to the embodiments described above, and various modifications other than those described above can be made without departing from the purport of the present invention. For example, the reagent layer may be formed to have a three-layer structure including enzyme layer 106b, mediator layer 106c, and an intermediate layer containing a hydrophilic polymer having no double bond of oxygen atoms provided between enzyme layer 106b and mediator layer 106c. Thereby, the intermediate layer prevents the enzyme contained in enzyme layer 106b from coming into contact with the mediator contained in mediator layer 106c, and thus a reaction between the enzyme and the mediator in the stored state can be effectively prevented.

Further, by combining plural types of hydrophilic polymers having no double bond of oxygen atoms and appropriately mixing them into the reagent layer, movement of blood cells in the blood sample can be effectively inhibited, and diffusion and mixing of the enzyme layer and the mediator layer can be decreased to improve the effect of suppressing reduction of the mediator.

Furthermore, by changing a combination of the enzyme and the mediator to be contained in reaction layer 106 of biosensor 100 described above, an ethanol sensor, a lactic acid sensor, or the like may be formed.

In addition, although biosensor 100 is formed to have a dual-electrode structure having working electrode 101 and counter electrode 102 in the embodiments described above, biosensor 100 may be formed to have a triple-electrode structure by further providing a reference electrode. In this case, it is only necessary to apply a predetermined potential based on counter electrode 102 to working electrode 101, while counter electrode 102 is grounded and a reference potential is applied to the reference electrode by a voltage output portion.

Further, although supply of a blood sample into cavity 103 is detected by monitoring a current which flows between working electrode 101 and counter electrode 102 by applying a predetermined voltage between working electrode 101 and counter electrode 102 in the embodiments described above, a sensing electrode for sensing supply of a sample into cavity 103 may be further provided. In this case, it is only necessary to detect supply of a sample into cavity 103 by monitoring a current which flows between counter electrode 102 and the sensing electrode by applying a predetermined voltage between counter electrode 102 and the sensing electrode.

Furthermore, of electrode layer 110, spacer layer 120, and cover layer 130 forming biosensor 100, at least cover layer 130 is desirably formed of a transparent member such that supply of a blood sample into cavity 103 can be visually recognized.

### INDUSTRIAL APPLICABILITY

The present invention is widely applicable to a biosensor including an electrode layer in which an electrode system including a working electrode and a counter electrode is provided, a spacer layer in which a slit for forming a cavity is formed and which is stacked on the electrode layer, a cover layer in which an air hole communicating to the cavity is formed and which is stacked on the spacer layer, and a reaction layer provided on the working electrode and the counter electrode.

### REFERENCE SIGNS LIST

100: biosensor; 101: working electrode; 102: counter electrode; 103: cavity; 104: slit; 105: air hole; 106: reaction layer; 106a: hydrophilic layer; 106b: enzyme layer; 106c: mediator layer; 106d: intermediate layer; 106e: reagent layer; 110: electrode layer; 120: spacer layer; 130: cover layer.

## Claims

1. A biosensor, comprising:
an electrode layer in which an electrode system including a working electrode and a counter electrode is provided on one surface of an insulating substrate;
a spacer layer in which a slit is formed and which is stacked on said one surface of said electrode layer with said slit being arranged on tip end sides of said working electrode and said counter electrode;
a cavity which is formed by said electrode layer and said slit and into which a sample is to be supplied;
a cover layer in which an air hole communicating to said cavity is formed and which is stacked on said spacer layer to cover said cavity; and
a reaction layer provided on the tip end sides of said working electrode and said counter electrode exposed at said cavity,
wherein said reaction layer includes
a hydrophilic layer provided on said electrode layer and containing a hydrophilic polymer having a double bond of oxygen atoms, and
a reagent layer stacked on said hydrophilic layer and containing an enzyme which reacts with a substance to be measured, a mediator, and a hydrophilic polymer having no double bond of oxygen atoms.

2. The biosensor according to claim 1, wherein said reaction layer further includes an intermediate layer containing said hydrophilic polymer having no double bond of oxygen atoms between said hydrophilic layer and said reagent layer.

3. The biosensor according to claim 1 or 2, wherein said reagent layer includes
an enzyme layer containing said enzyme and said hydrophilic polymer having no double bond of oxygen atoms, and
a mediator layer containing said mediator and said hydrophilic polymer having no double bond of oxygen atoms.

4. The biosensor according to claim 3, wherein said mediator layer is stacked on said enzyme layer.

5. The biosensor according to any of claims 1 to 4, wherein said hydrophilic polymer having no double bond of oxygen atoms includes at least one of hydroxypropyl methylcellulose, hydroxypropyl cellulose, methylcellulose, hydroxyethyl cellulose, hydroxyethyl methylcellulose, polyvinyl alcohol, and polyethylene glycol.

6. The biosensor according to any of claims 1 to 5, wherein said hydrophilic polymer having a double bond of oxygen atoms includes at least carboxymethyl cellulose.
